# EUROPEAN PATENT SPECIFICATION

(11) **EP 3 609 958 B1**
(45) Date of publication and mention of the grant of the patent: **05.03.2025**
(21) Application number: 18882268.8
(22) Date of filing: 29.06.2018
(51) Int. Cl.: C08L 77/06, B32B 27/00, B32B 27/18, B41M 5/382, C08L 77/02

(54) **POLYMER BASED COMPOSITE SUITABLE FOR BOTH LASER MARKING AND PRINTING BY DYE DIFFUSION THERMAL TRANSFER PRINTING**
POLYMERBASIERTER VERBUNDSTOFF FÜR LASERMARKIERUNG WIE AUCH DRUCKEN DURCH THERMOTRANSFERDRUCK MIT FARBSTOFFDIFFUSION
COMPOSITE À BASE DE POLYMÈRE APPROPRIÉ POUR UN MARQUAGE AU LASER ET UNE IMPRESSION PAR IMPRESSION PAR TRANSFERT THERMIQUE PAR DIFFUSION DE COLORANT

(43) Date of publication of application: 19.02.2020
(73) Proprietor: Evonik Specialty Chemicals (Shanghai) Co., Ltd., Shanghai 201507 (CN); Evonik Operations GmbH, 45128 Essen (DE)
(72) Inventor: YU, Huifeng, Putuo District Shanghai 200061 (CN); YANG, Jianmin, Pudong District Shanghai 200120 (CN); TENG, Fei, Shanghai 201108 (CN); HERMES, Florian, 45721 Haltern am See (DE); YE, Chenyu, Shanghai 201108 (CN)
(74) Representative: Evonik Patent Association
(86) International application number: PCT/CN2018/093801
(87) International publication number: WO 2020/000418

(56) References cited:
- CN-A- 1 143 228
- US-A1- 2002 173 596
- US-A1- 2005 228 145
- US-A1- 2007 104 971
- US-A1- 2012 001 413
- US-A1- 2012 001 413

## Description

### Field of the Invention

The present invention relates to a security and/or valuable document containing polymer based composite which is suitable for both laser marking and printing by means of dye diffusion thermal transfer printing.

### Prior Art

Inscribing plastics by means of laser engraving is widely used in security documents, in particular identification documents such as passports, ID cards or credit cards. The black-and-white personalization of cards by means of laser engraving, that is to say the application of lettering or images such as black-and-white photographs, is generally known. Personalization by means of laser engraving is generally distinguished in particular by its high security against forgery. The (text) image is formed on the inside of the card, so that it is not possible to remove the (text) image and produce a new (text) image.

At present, the most commonly used plastics in laser engraving identification cards and security documents are polycarbonates. For example, US2012001413 describes a layered structure having laser engravability wherein the layer for laser engraving is polycarbonate based.

In the production of security and/or valuable documents, in particular identification documents in the form of cards (ID cards), there is also the need for colored personalization of the documents. One of these consists of the use of dye diffusion thermal transfer printing of colored information on substrates of plastic, since this offers the advantage of a high image accuracy in colored printing, and images and information personalized on the spot can also be printed in good quality by this means.

Diverse plastics materials have already been discussed in the literature for printability by means of dye diffusion thermal transfer printing. Thus, according to Stark et al., Polymer 40 (1999) 4001-4011 diverse plastics are suitable as materials for dye acceptor coatings, but without concrete preferences being mentioned there. WO 98/07573 A1 discloses dye acceptor coatings of polyvinyl chloride copolymers. In Shearmur et al., Polymer 37, vol. 13 (1996) 2695-2700, diverse polyesters and polyvinyl butyral are investigated as possible materials for dye acceptor layers. U.S. Pat. No. 5,334,573 investigates suitable materials with the aim of avoiding sticking of the dye acceptor sheets to the dye donor sheets. EP 673 778 B1 discloses thermotransfer receiver films with a coated, metallized polymer surface as the receiver film. Plastics, such as PVC, vinyl acetate/vinyl chloride copolymers, polyvinylidene acetals, PMMA and silicone surfaces based on polymers are mentioned here in particular for the receiver layer.

When substrates of plastic are used for such printing, however, there is the problem that the surface of the substrate of plastic must offer an adequate absorbency for the printing ink, without the image sharpness and color intensity thereby being impaired. In many cases, the color intensity of the printed images in particular is in need of improvement.

For the moment, there is no commercial solution for one material which suitable for both laser marking and printing by means of dye diffusion thermal transfer printing.

### Object

It was an object of the present invention, via development and formulation of suitable polymers, to develop a composite which is suitable for both laser marking and printing by means of dye diffusion thermal transfer printing.

A particular object of the present invention was that the composite can be widely used in security documents, in particular identification documents such as passports, ID cards or credit cards.

Another object was to develop a layered structure comprising the composite which is more flexibility, durability and environmentally friendly, than the prior art.

Other objects not explicitly mentioned will be apparent from the entirety of the description, claims, and examples below.

### Achievement of Objects

The objects are achieved by a security and/or valuable document, comprising a layered structure comprising
(A) at least one Layer (A) comprising a thermoplastic plastic, and
(B) at least one Layer (B) produced from a polymer based composite,
wherein the polymer based composite comprises (a) a polyamide component, (b) a (co)-polyamide based on ether units and amide units, and (c) carbon black.

Within the scope of the invention, ppm means ppm by weight, unless indicated otherwise.

Surprisingly, it has been found that
(1) the (co)-polyamide (b) offers sufficient absorbency for the printing ink, thus the polymer based composite can be printed on by means of dye diffusion thermal transfer printing, and a good color intensity of the printed image is achieved, and
(2) the selection of the polyamide component and the (co)-polyamide and the amount of the carbon black result in both sufficient transparency and sufficient absorption centers for the laser energy, such that desired quality (that is to say sharpness and resolution) of laser marking is achieved.

In addition, the use of the polymer based composite
(1) as material for producing mouldings which are marked with the aid of lasers, and/or
(2) as the ink receiver or printing medium in dye diffusion thermal transfer printing is described.

Moreover, a moulded article made of the polymer based composite is described.

Furthermore, a layered structure comprising:
(A) at least one Layer (A) comprising a thermoplastic plastic, and
(B) at least one Layer (B) produced from the polymer based composite as above described is described.

Other advantages of the layered structure comprising the polymer based composite are more durability, for example with respect to polycarbonate, and more environmentally friendly with respect to PVC.

The present invention further provides a process for the production of the document of present invention comprising a layered structure, comprising bonding the various films of plastic to one another by a process selected from lamination, coextrusion, in mould labeling, and direct gluing.

### Detailed description of the invention

The polymer based composite comprises
(a) a polyamide component (a),
(b) a (co)-polyamide based on ether units and amide units (b), and
(c) carbon black.

Preferably, the polyamide component (a) comprises based on the total weight thereof at least 50 wt%, more preferably at least 80 wt%, and most preferably 95 wt% a polyamide selected from the group consisting of:
(a1) a linear aliphatic polyamide of the AB type having 10-12 carbon atoms, produced by polymerizing lactams having from 10-12 carbon atoms in the monomer unit or by polycondensing a ω-aminocarboxylic acids having from 10-12 carbon atoms in the monomer unit,
(a2) a linear aliphatic polyamide of the AABB type, produced by polycondensing diamines having 6-14 carbon atoms in the monomer units and dicarboxylic acids having 9-14 carbon atoms in the monomer unit,
(a3) a cycloaliphatic polyamide, produced by polycondensing a cycloaliphatic diamine having 10-20 carbon atoms in the monomer units and an aliphatic dicarboxylic acid having 8-18 carbon atoms in the monomer units, optionally further produced by a lactam having 6-14 carbon atoms or a linear aliphatic ω-aminocarboxylic acid having 6-14 carbon atoms,
(a4) a semi-aromatic polyamide based on an cycloaliphatic diamine having 10-20 carbon atoms and an aromatic dicarboxylic acid having 8-18 carbon atoms, optionally further produced by a lactam having 6-14 carbon atoms or a linear aliphatic ω-aminocarboxylic acid having 6-14 carbon atoms, (a5) a semi-aromatic polyamide based on an aliphatic diamine having 2-12 carbon atoms and an aromatic dicarboxylic acid having 8-18 carbon atoms, optionally further produced by a lactam having 6-14 carbon atoms or a linear aliphatic ω-aminocarboxylic acid having 6-14 carbon atoms,
and the compound thereof as well as the (co)-polymer thereof.

Polyamides (a1) to (a5) are suitable polyamide components. Preferred polyamides are (a1), (a2), or (a3), more preferably (a1) or (a3) and especially (a1).

The linear aliphatic polyamide (a1) has on average from 8 to 14 carbon atoms in the individual monomer units. Said linear aliphatic polyamide (a1, a2) is producible from a combination of a diamine and a dicarboxylic acid, from an ω-aminocarboxylic acid and/or the corresponding lactam. The monomer units in question are therefore the units which derive from the lactam, ω-aminocarboxylic acid, diamine or dicarboxylic acid. Suitable linear aliphatic polyamides (a1, a2) further include (co)-polyamides which comprise diamines having 6-14 carbon atoms in the monomer unit and dicarboxylic acids having 9-14 carbon atoms in the monomer unit (e.g. PA12/1012).

The following polyamides (a1), (a2) are suitable by way of example: PA79, PA610, PA99, PA810, PA612, PA10, PA1010, PA812, PA614, PA11, PA1012, PA1210, PA913, PA139, PA814, PA12, PA1212, PA1113, PA1014, PA1410, and compounds as well as (co)-polyamides based on these systems. Alternatively, the polyamides (a2) can be PA88, PA97, PA106, PA108, PA126, PA128, PA146, PA148, PA616, PA816, PA618 and compounds as well as (co)-polyamides based on these systems.

Commercially available products of the linear aliphatic polyamide (a1) are for example PA12 products under the tradename of VESTAMID^{®} L, commercially available from Evonik Resource Efficiency GmbH, such as VESTAMID^{®} L2101F and VESTAMID^{®} L1940.

Suitable cycloaliphatic diamines of the cycloaliphatic polyamide (a3) and the semi-aromatic polyamide (a4) are for example bis-(4-amino-3-methyl-cyclohexyl)-methane (MACM), bis-(4-aminocyclohexyl)-methane (PACM), bis-(4-amino-3-ethyl-cyclohexyl)-methane (EACM), bis-(4-amino-3,5-dimethyl-cyclohexyl)-methane (TMDC), 2,2-(4,4'-diaminodicyclohexyl)propane (PACP), and the mixtures thereof.

Suitable aliphatic dicarboxylic acids are for example sebacic acid, undecanedioic acid, dodecanedioic acid, tridecanedioic acid (brassylic acid), tetradecanedioic acid, pentadecanedioic acid, hexadecanedioic acid, and the mixtures thereof.

Suitable aromatic dicarboxylic acids are for example isophthalic acid, terephthalic acid, and naphthalene dicarboxylic acid, and the mixtures thereof.

The cycloaliphatic polyamide (a3) is typically produced from the cycloaliphatic diamine and the dicarboxylic acid and the semi-aromatic polyamide (a4) is typically produced from the cycloaliphatic diamine and the aromatic dicarboxylic acid by polycondensation in the melt according to known processes. However, derivatives thereof may also be employed, for example the diisocyanate which derives from the cycloaliphatic diamine, or a dicarboxylic diester which derives from the dicarboxylic acid.

Preferably, the cycloaliphatic polyamide (a3) is selected from the group consisting of MACM10, MACM11, MACM12, MACM13, MACM14, MACM16, PACM10, PACM11, PACM12, PACM13, PACM14, PACM16, TMDC10, TMDC11, TMDC12, TMDC13, TMDC14, TMDC15, TMDC16, and compounds as well as (co)-polyamides based on these systems.

Preferably, the semi-aromatic polyamide (a4) is selected from the group consisting of MACMI/12, MACMT/12, PACMI/12, PACMT/12, and compounds as well as (co)-polyamides based on these systems.

The cycloaliphatic diamine may exist as a mixture of isomers. For example, PACM may exist as a mixture of cis, cis, cis, trans and trans, trans isomers. It is commercially available with various isomer ratios. In one preferred embodiment the trans, trans isomer content of the PACM or of the employed derivative thereof is 30-70% and particularly preferably from 35-65%.

More preferably, the cycloaliphatic polyamide (a3) or the semi-aromatic polyamide (a4) is transparent with a haze of less than 3% and particularly preferably of less than 2% where both properties are determined to ASTM D1003 on injection moulded test specimens of 2 mm in thickness.

Commercially available products of the cycloaliphatic polyamide (a3) are for example PA PACM12 products under the tradename of TROGAMID^{®}, commercially available from Evonik Resource Efficiency GmbH, such as TROGAMID^{®} CX7323 and TROGAMID^{®} CX9704.

The semi-aromatic polyamide (a5) is based on an aliphatic diamine having 2-12 carbon atoms and an aromatic dicarboxylic acid having 8-18 carbon atoms.

Suitable aliphatic diamines are for example ethylenediamine, butanediamine, pentanediamine, hexamethylenediamine, octanediamine, methyloctanediamine, nonanediamine, decanediamine, undecanediamine, dodecanediamine, trimethylhexamethylenediamine, methylpentanediamine, and the mixtures thereof.

Suitable aromatic dicarboxylic acids are for example isophthalic acid, terephthalic acid, and naphthalene dicarboxylic acid, and the mixtures thereof.

Preferably, the semi-aromatic polyamide (a5) is selected from the group consisting of PA6I/6T, PA 10T/6T, PA6T/6I and PA6-3-T and compounds as well as (co)-polyamides based on these systems.

Commercially available products of the semi-aromatic polyamide (a5) are for example PA6-3-T products under the tradename of TROGAMID^{®} and PA6I/6T products under the tradename of VESTAMID^{®} HTplus, both commercially available from Evonik Resource Efficiency GmbH, such as TROGAMID^{®} T5000 and VESTAMID^{®} HTplus M5000.

The (co)-polyamide (b) is based on ether units and amide units.

Preferably, the (co)-polyamide (b) is selected from PEBA (co)-polymers composed of blocks of amide units and of sequences of ether units.

PEBA (co)-polymers are sequential multi-block (co)-polymers and belong to the specific category of polyetheresteramides or polyetheramides, when they result from the copolycondensation of polyamide sequences comprising reactive carboxyl ends with polyether sequences comprising reactive ends which are polyether polyols(polyether diols), the bonds between the polyamide blocks and the polyether blocks being ester bonds, or else to the category of polyetheramides or polyether-block-amides, when the polyether sequences comprise amine ends. Both the two above families are included in the definition of the (co)-polyamide (b).

The ether units or sequences of the (co)-polyamide (b) result, for example, from at least one polyalkylene ether polyol, in particular a polyalkylene ether diol, preferably chosen from polyethylene glycol (PEG), polypropylene glycol (PPG), polytrimethylene glycol (PO3G), polytetramethylene glycol (PTMG) and their blends or their (co)-polymers.

The polyether blocks can also comprise, as indicated above, polyoxyalkylene sequences comprising NH₂ chain ends, it being possible for such sequences to be obtained by cyanoacetylation or reductive amination of α,ω-dihydroxylated aliphatic polyoxyalkylene sequences referred to as polyether diols. More particularly, it will be possible to use Elastamine^{®} grades (for example, Elastamine^{®} RP405, RP2005, RE900, RE2003, RTP 542, commercial products from Huntsman. See also Patents JP 2004346274, JP 2004352794 and EP1482011).

The amide units or blocks of the (co)-polyamide (b) can in particular be residues of linear aliphatic monomers, such as:
- linear aliphatic diamines which can be selected from linear aliphatic diamines having 2-14 carbon atoms, such as 1,4-tetramethylenediamine, 1,6-hexamethylene-diamine, 1,9-nonamethylenediamine and 1,10-decamethylenediamine; or cycloaliphatic diamines, most preferably based on 1,4-disubstituted cyclohexane backbones.
- aliphatic dicarboxylic acids which can be selected from aliphatic dicarboxylic acids having 6-36 carbon atoms, preferably 9-18 carbon atoms, in particular 1,10-decanedicarboxylic acid (sebacic acid), 1,12-dodecanedicarboxylic acid, 1,14-tetradecanedicarboxylic acid and 1,18-octadecanedicarboxylic acid;
- lactams, such as caprolactam, oenantholactam and lauryllactam; and
- α,ω-aminocarboxylic acids, such as aminocaproic acid, 7-aminoheptanoic acid, 11-aminoundecanoic acid or 12-aminododecanoic acid; and
- aromatic or cycloaliphatic diacids, most preferably based on 1,4-disubstituted cyclohexane backbones.

Mention may be made, as PEBA (co)-polymers which are particularly preferred for the (co)-polyamide (b) of those composed of amide units which are residues of linear aliphatic monomers and of polyether sequences of PTMG, PPG or PEG type, it being possible for the residues of linear aliphatic monomers in particular to be residues of a diamine and of a diacid.

For the PEBAs which can be used as the (co)-polyamide (b), the number-average molecular weight of the polyimide blocks is preferably 500-12,000 g/mol, more preferably 2,000-6,000 g/mol; and the number-average molecular weight of the sequences of ether units is preferably 200-4,000 g/mol, preferably 300-1,100 g/mol.

The polyamide block units can represent 50-95% by weight of the (co)-polyamide (b).

The (co)-polyamide (b) includes amide units for which the number of carbons per amide is on average at least equal to 9, and / or the amide units of the (co)-polyamide (b) represent 50-95% by weight of the (co)-polyamide (b).

Commercially available products of the (co)-polyamide (b) are for example PEBA (poly-ether-block-amide) products under the tradename of VESTAMID^{®}, commercially available from Evonik Resource Efficiency GmbH, such as VESTAMID^{®} E40-S3, E62-S3, E55-S3, E47-S3, and E58-S4.

Preferably, the plastic material comprises based on the total weight thereof:
5-95%, more preferably 20-80%, most preferably 30-70% of the polyamide component (a), and
5-95%, more preferably 20-80%, most preferably 30-70% of the (co)-polyamide (b).

The polymer based composite comprises carbon black as a laser-sensitive additive.

Preferably, the carbon black is present in the polymer based composite in an amount of 50-300ppm, more preferably 100-200 ppm, even more preferably 120-180 ppm, based on the total weight of the polymer based composite.

Preferably, the carbon black has an average particle size of 10 nm-10 µm, and more preferably of 50 nm-2 µm.

Commercially available products of the carbon black are for example carbon black products under the tradenames Printex^{®} and Lamp black both commercially available from Orion Engineered Carbons GmbH, such as Lamp black 101.

The polymer based composite may include other ingredients, such as stabilizers, lubricants, colorants, plasticizers, nucleants, antioxidants, impact modifiers and UV absorbers, depending on the desired performance without impairing the transparency significantly. Preferably, these ingredients are added in low amounts, typically up to 20 wt%, more preferably up to 5 wt% of the total composite.

The carbon black is premixed with polyamide component (a) to produce masterbatch granules.

The polymer based composite can be produced for example in a twin screw compounding extruder at conventional processing temperatures for the polyamide component (a), the (co)-polyamide (b) and the masterbatch granules.

The moulded article is made of the polymer based composite. Preferably, the moulded article is in the form of a film.

The layered structure comprises:
(A) at least one Layer (A) comprising a thermoplastic plastic, and
(B) at least one Layer (B) made of the polymer based composite as above described.

There is no limit to the thermoplastic plastic of Layer (A), examples of which include cellulose acetate propionate, cellulose acetate butyrate, polyesters, polyamides, polycarbonates, polyimides, polyolefins, polyvinylchlorides, polyvinylacetals, polyethers and polysulphonamides. Preferably, the thermoplastic plastic of Layer (A) is a polyamide identical to the polyamide of Layer (B) for compatibility reason.

Preferably, Layer (A) is a white or translucent layer.

A white or translucent Layer (A) is preferably a layer colored white with pigments or having a filler content of fillers. Such layers, preferably layers of plastic, colored white or having a filler content of fillers preferably comprise titanium dioxide, zirconium dioxide, barium sulfate or glass fibres as pigments and/or fillers. The pigments or fillers mentioned are preferably added to the plastics before the shaping to give the Layer (A), which can be carried out, for example, by extrusion or coextrusion, in amounts of 2-60 wt%, particularly preferably 10-40 wt%, based on the total weight of pigment or filler and plastics material.

Preferably, the layered structure comprises at least three layers wherein Layer (A) is between two layers (B).

Such an at least three-layered structure has the advantage that, when it is incorporated into a security document, it is not necessary to ensure that the Layer (B) (which is printable by means dye diffusion thermal transfer printing) is oriented outwards.

The layered structure can have one or more further layer(s) comprising at least one thermoplastic plastic between the Layer (A) and the Layer(s) (B). These can be translucent or white layers, transparent layers or colored layers.

The layered structure can be produced, for example and preferably, by means of lamination, coextrusion, in mould labeling, and direct gluing of the layers that are present.

The layered structure is particularly preferably suitable for identification and/or valuable documents in the form of bonded or laminated layers in the form of plastics cards.

The layered structure is outstandingly suitable as a component of security documents, preferably identification documents, which are to be marked with the aid of lasers and/or printed by means dye diffusion thermal transfer printing.

Accordingly, the invention provides an identification and/or valuable document, comprising at least the layered structure. The identification and/or valuable documents are for example identification cards, passports, driving licenses, credit cards, bank cards, cards for controlling access or other identity documents.

The identification and/or valuable document can further comprise additional layers which provide protection against UV radiation, protection against mechanical and chemical damage etc.

### Drawings

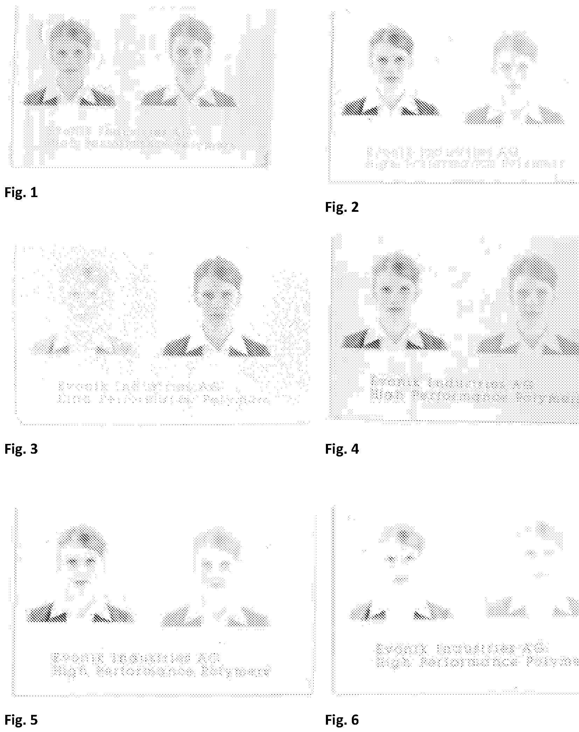

Figs. 1-6 are the scanned images of samples of sandwich structures (EC1-EC6) after both laser engraving and D2T2 printing. Each of Figs. 1-6 comprises two portraits of the same woman and two lines of letters. The left portraits are printed by D2T2. The right portraits and the letters are inscribed by laser engraving.

### Examples

### Material

TROGAMID^{®} CX7323: PA PACM12, a polyamide produced from bis(4-aminocyclohexyl)methane and dodecanedioic acid; ηᵣₑₗ = 1.8; commercially available from Evonik Resource Efficiency GmbH;
VESTAMID^{®} L2101F: a base-unit PA12 with ηᵣₑₗ=2.2, commercially available from Evonik Resource Efficiency GmbH;
VESTAMID^{®} E58-S4: a polyether-block-amide which is a (co)-polymer consisting of PA12 segments and polyether segment with ηᵣₑₗ = 1.8. (PA12 elastomer), commercially available from Evonik Resource Efficiency GmbH;
Ti-Pure^{™} R-105: Titanium dioxide, commercially available from the Chemours Company;
Ultranox^{®} 626: Phosphite commercially available from Addivant Germany GmbH;
Lamp black 101: Carbon black with an average particle of 95 nm, commercially available from Orion Engineered Carbons GmbH.

### Preparation of masterbatches

Masterbatch granules having the compositions and the weight percentages as indicated in the following table 1 were prepared in a twin-screw compounding extruder (Coperion ZSK-26mc) at conventional processing temperatures for TROGAMID^{®} CX7323 of 260-300°C or for VESTAMID^{®} L2101F of 250-300°C.

**Table 1 Masterbatch**

| | MB1 | MB2 |
|---|---|---|
| TROGAMID^{®} CX7323 | 99.88% | |
| VESTAMID^{®} L2101F | | 99.88% |
| Lampblack 101 | 0.12% | 0.12% |

### Preparation of the polymer based composites and the films made thereof

Polyamide compounds having the compositions and the weight percentages of the examples (EA1-EA2 and EB1-EB6) as indicated in the following table 2 were prepared in a twin-screw compounding extruder (Coperion ZSK-26mc) at conventional processing temperatures for TROGAMID^{®} CX7323 of 260-300°C or for VESTAMID^{®} L2101F of 250-300°C.

The installation used consisted of an extruder (Dr. Collin E20M) with a screw of 20 mm diameter (D) and length of 25 × D and T-die head with 25 mm slot width.

The films were prepared according to the following process:
The granules of the polyamide compounds were dried and fed into the hopper. The granules were then melted and in situ extruded out from the die. The melt of the polymer compounds came out from the die and dropped at the polishing calender. Final shaping and cooling of the films took place on the polishing calender consisting of three rolls. The films made of the polymer compounds with a thickness of 0.1 mm were obtained.

**Table 2 Recipe of polyamide compounds the films made thereof**

| | **EB1** | **EB2** | **EB3** | **EB4** | **EB5** | **EB6** | **EA1** | **EA2** |
|---|---|---|---|---|---|---|---|---|
| TROGAMID^{®} CX7323 | 35% | 42.5% | 65% | | | | 84.8% | |
| VESTAMID^{®} L2101F | | | | 35% | 42.5% | 68% | | 84.8% |
| VESTAMID^{®} E58-S4 | 50% | 50% | 20% | 50% | 50% | 17% | | |
| Masterbatch of MB1 | 15% | 7.5% | 15% | | | | | |
| Masterbatch of MB2 | | | | 15% | 7.5% | 15% | | |
| Ti-Pure^{™} R-105 | | | | | | | 15% | 15% |
| Ultranox^{®} 626 | | | | | | | 0.2% | 0.2% |

| Matrix | | | | | | | | |
|---|---|---|---|---|---|---|---|---|
| TROGAMID^{®} CX7323 | 50% | 50% | 80% | | | | 100% | |
| VESTAMID^{®} L2101F | | | | 50% | 50% | 83% | | 100% |
| VESTAMID^{®} E58-S4 | 50% | 50% | 20% | 50% | 50% | 17% | | |

| Fillers | | | | | | | | |
|---|---|---|---|---|---|---|---|---|
| Carbon black content (ppm) | 180 | 90 | 180 | 180 | 90 | 180 | | |
| White pigment content | | | | | | | 15% | 15% |

### Preparation of samples of sandwich structure

Sandwich structures having two outer layers and five core layers as following were prepared:
two outer layers: a film of EB1-EB6;
five core layers: a film of EA-EA2 which has the same polyamide as the outer layers.

The films of the individual layers of the sandwich structure were stacked in a mold for lamination. The mold was then transferred to a plate press machine (Collin P 300P). The films were heated to 160-200°C for 15min, then laminated under a pressure of 5-35 bar and cooled to 23°C. Samples of the sandwich structure had a thickness of 0.78-0.82 mm were obtained and then cut to have a dimension of 53.98 mm × 85.60 mm as ID cards. The final structure of the samples is indicated in the following Table 3.

**Table 3 The sandwich structures**

| | **EC1** | **EC2** | **EC3** | **EC4** | **EC5** | **EC6** |
|---|---|---|---|---|---|---|
| Outer layers | EB1 | EB2 | EB3 | EB4 | EB5 | EB6 |
| Core layers | EA1 | | | EA2 | | |

### Printing of the samples of the sandwich structure by Dye Diffusion Thermal Transfer Printing (D2T2 Printing)

Printing experiments were carried out on the samples of the sandwich structure on an installation from Datacard^{®} CD800 Card Printer with the following parameters:
Colour ribbon: Datacard 535000-003 YMCKT Colour Ribbon
Resolution: 300 × 600 dpi

A coloured image of a woman's portrait was printed on the left part of one outer layer of the sandwich structure. Image quality was assessed. The result is indicated in Figs. 1-6 and Table 4.

**Table 4 Performance of D2T2 printing on the examples**

| | **EC1** | **EC2** | **EC3** | **EC4** | **EC5** | **EC6** |
|---|---|---|---|---|---|---|
| Image quality | +++ | +++ | + | +++ | +++ | ++ |

It can be seen that the image quality can be improved by the polyether-block-amide (e.g. VESTAMID^{®} E58-S4) added to the plastic material.

Image quality is graded as following:
Poor (-): outline of the portrait is difficult to recognize, colours are barely transferred on the substrate from the ribbon;
Low (+): the outline of the portrait can be reorganized but without clearly defined facial features;
Medium (++): the outline of the portrait can be reorganized, facial features can be clearly observed but with some colour distortion;
High (+++): the outline of the portrait can be reorganized, facial features can be clearly observed with high colour intensity.

### Laser Engraving of the samples of the sandwich structure

Laser engraving was carried out on the samples of EC1-EC6 on a TruMark 3130 (TRUMPF) machine with the following parameters:
Laser medium: Nd : YVO₄
Wavelength: 1064 nm
Power: 10.5 W
Voltage: 220 V
DPI: 600
Frequency: 45000 Hz

In the laser engraving, a black-and-white portrait of a woman and letters were inscribed the right part and bottom part respectively in one outer layer of the individual samples of EC1-EC6. As also indicated in Figs. 1-6, an excellent contrast and very good graduation of the greyscales were achieved in EC1-EC6.

## Claims

1. A security and/or valuable document, comprising a layered structure comprising
(A) at least one Layer (A) comprising a thermoplastic plastic, and (B) at least one Layer (B) produced from a polymer based composite,
preferably the document is an identification document, e.g. an identification card, **characterized in that** the polymer based composite comprises
(a) a polyamide component (a),
(b) a (co)-polyamide (b) based on ether units and amide units, and
(c) carbon black.

2. The document of claim 1, wherein
the polymer based composite comprises based on the total weight thereof
5-95%, preferably 20-80%, more preferably 30-70% of the polyamide component (a), and
5-95%, preferably 20-80%, more preferably 30-70% of the (co)-polyamide (b).

3. The document of claim 1 or 2, wherein
the (co)-polyamide (b) is selected from poly-ether-block-amide (PEBA) (co)-polymers composed of blocks of amide units and of sequences of ether units, preferably selected from polyetheresteramides and poly-ether-block-amides.

4. The document of claims 1-3, wherein
the ether units of the (co)-polyamide (b) result from at least one polyalkylene ether polyol, preferably selected from polyethylene glycol (PEG), polypropylene glycol (PPG), polytrimethylene glycol (PO3G), polytetramethylene glycol (PTMG) and their blends or their (co)-polymers;
wherein the (co)-polyamide (b) is composed of amide units which are residues of linear aliphatic monomers and of polyether sequences of PTMG, PPG or PEG type.

5. The document of claim 3 or 4, wherein
the number-average molecular weight of the polyamide blocks is 500-12,000 g/mol, preferably 2,000-6,000 g/mol, and / or
the number-average molecular weight of the sequences of ether units is 200-4,000 g/mol, preferably 300-1,100 g/mol.

6. The document of any one of the preceding claims, wherein
the polyamide component (a) is selected from the group consisting of:
(a1) a linear aliphatic polyamide of the AB type having 10-12 carbon atoms, produced by polymerizing lactams having from 10-12 carbon atoms in the monomer unit or by polycondensing a ω-aminocarboxylic acids having from 10-12 carbon atoms in the monomer unit,
(a2) a linear aliphatic polyamide of the AABB type, produced by polycondensing diamines having 6-14 carbon atoms in the monomer units and dicarboxylic acids having 9-14 carbon atoms in the monomer unit,
(a3) a cycloaliphatic polyamide, produced by polycondensing a cycloaliphatic diamine having 10-20 carbon atoms in the monomer units and an aliphatic dicarboxylic acid having 8-18 carbon atoms in the monomer units, optionally further produced by a lactam having 6-14 carbon atoms or a linear aliphatic ω-aminocarboxylic acid having 6-14 carbon atoms,
(a4) a semi-aromatic polyamide based on an cycloaliphatic diamine having 10-20 carbon atoms and an aromatic dicarboxylic acid having 8-18 carbon atoms, optionally further produced by a lactam having 6-14 carbon atoms or a linear aliphatic ω-aminocarboxylic acid having 6-14 carbon atoms,
(a5) a semi-aromatic polyamide based on an aliphatic diamine having 2-12 carbon atoms and an aromatic dicarboxylic acid having 8-18 carbon atoms, optionally further produced by a lactam having 6-14 carbon atoms or a linear aliphatic ω-aminocarboxylic acid having 6-14 carbon atoms,
and the compound thereof as well as the (co)-polymer thereof.

7. The document of any one of the preceding claims, wherein
the linear aliphatic polyamide (a1) or (a2) is selected from the group consisting of: PA79, PA610, PA99, PA810, PA612, PA10, PA1010, PA812, PA614, PA11, PA1012, PA1210, PA913, PA139, PA814, PA12, PA1212, PA1113, PA1014, PA1410, and the compound thereof.

8. The document of claims 1-6, wherein
the cycloaliphatic polyamide (a3) and the semi-aromatic polyamide (a4) are selected from the group consisting of MACM10, MACM11, MACM12, MACM13, MACM14, MACM16, PACM10, PACM11, PACM12, PACM13, PACM14, PACM16, TMDC10, TMDC11, TMDC12, TMDC13, TMDC14, TMDC15, TMDC16, MACMI/12, MACMT/12, PACMI/12, PACMT/12 or mixtures or (co)-polyamides based on these systems.

9. The document of claim 8, wherein
the PACM has a content of trans, trans isomer of 30-70% and preferably 35-65%.

10. The document of claims 6, 8 or 9, wherein
the cycloaliphatic polyamide (a3) is transparent with a haze of less than 3% and particularly preferably of less than 2% where both properties are determined to ASTM D1003 on injection moulded test specimens of 2 mm in thickness.

11. The document of any one of the preceding claims, wherein the carbon black
has a particle size of 10 nm-10 µm, and preferably of 50 nm-2 µm, and/or
is present in an amount of 50-300 ppm, preferably 100-200 ppm, more preferably 120-180 ppm based on the total weight of the polymer based composite.

12. The document of any one of the preceding claims, wherein
the composite further comprises up to 20%, preferably up to 5%, by weight, of one or more additional ingredients, preferably selected from the group consisting of: stabilizers, lubricants, colorants, plasticizers, nucleants, antioxidants, impact modifiers and UV absorbers.

13. The document of claims 1-8, wherein
the thermoplastic plastic of Layer (A) is selected from cellulose acetate propionate, cellulose acetate butyrate, polyesters, polyamides, polycarbonates, polyimides, polyolefins, polyvinylchlorides, polyvinylacetals, polyethers and polysulphonamides, preferably the thermoplastic plastic of Layer (A) is a polyamide component identical to the polyamide component of Layer (B).

14. The document of claims 1-9, wherein
Layer (A) is a white or translucent layer, and / or
Layer (A) is between two Layers (B), and / or
between Layer (A) and the Layer(s) (B) the layered structure has at least one further layer comprising at least one thermoplastic plastic.

15. A process for the production of the document of any one of the preceding claims comprising a layered structure, comprising bonding the various films of plastic to one another by a process selected from lamination, coextrusion, in mould labeling, and direct gluing.

## Patentansprüche

1. Sicherheits- und/oder Wertdokument, umfassend eine Schichtstruktur, umfassend
(A) mindestens eine Schicht (A), die einen thermoplastischen Kunststoff umfasst, und
(B) mindestens eine Schicht (B), die aus einem Verbundstoff auf Polymerbasis hergestellt ist,
wobei das Dokument vorzugsweise ein Identifikationsdokument ist, z. B. eine Identifikationskarte,
**dadurch gekennzeichnet, dass** der Verbundstoff auf Polymerbasis umfasst
(a) eine Polyamidkomponente (a),
(b) ein (Co) -Polyamid (b) basierend auf Ethereinheiten und Amideinheiten und
(c) Ruß.

2. Dokument nach Anspruch 1, wobei
der Verbundwerkstoff auf Polymerbasis bezogen auf sein Gesamtgewicht umfasst
5-95 %, vorzugsweise 20-80 %, bevorzugter 30-70 % der Polyamidkomponente (a), und
5-95 %, vorzugsweise 20\-80 %, bevorzugter 30-70 % des (Co)-Polyamids (b) .

3. Dokument nach Anspruch 1 oder 2, wobei das (Co)-Polyamid (b) ausgewählt ist aus Poly-Ether-Block-Amid (PEBA)-(Co)-Polymeren, die aus Blöcken von Amideinheiten und Sequenzen von Ethereinheiten zusammengesetzt sind, vorzugsweise ausgewählt aus Polyetheresteramiden und Poly-Ether-Block-Amiden.

4. Dokument nach den Ansprüchen 1-3, wobei
die Ethereinheiten des (Co)-Polyamids (b) aus mindestens einem Polyalkylenetherpolyol, das vorzugsweise ausgewählt ist aus Polyethylenglykol (PEG), Polypropylenglykol (PPG), Polytrimethylenglykol (PO3G), Polytetramethylenglykol (PTMG) und deren Gemischen oder deren (Co)-Polymeren resultieren;
wobei das (Co)-Polyamid (b) aus Amideinheiten zusammengesetzt ist, die Reste linearer aliphatischer Monomere und Polyethersequenzen vom PTMG-, PPG- oder PEG-Typ sind.

5. Dokument nach Anspruch 3 oder 4, wobei
das Zahlenmittel des durchschnittlichen Molekulargewichts der Polyamidblöcke 500 - 12.000 g/mol, vorzugsweise 2.000 - 6.000 g/mol beträgt, und / oder
das Zahlenmittel des Molekulargewichts der Sequenzen der Ethereinheiten 200 - 4.000 g/mol, vorzugsweise 300 - 1.100 g/mol beträgt.

6. Dokument nach einem der vorhergehenden Ansprüche, wobei
die Polyamidkomponente (a) ausgewählt ist aus der Gruppe bestehend aus:
(a1) einem linearen aliphatischen Polyamid vom AB-Typ mit 10-12 Kohlenstoffatomen, hergestellt durch Polymerisieren von Lactamen mit 10-12 Kohlenstoffatomen in der Monomereinheit oder durch Polykondensieren von ω-Aminocarbonsäuren mit 10-12 Kohlenstoffatomen in der Monomereinheit,
(a2) einem linearen aliphatischen Polyamid vom AABB-Typ, hergestellt durch Polykondensieren von Diaminen mit 6-14 Kohlenstoffatomen in den Monomereinheiten und Dicarbonsäuren mit 9-14 Kohlenstoffatomen in der Monomereinheit,
(a3) einem cycloaliphatischen Polyamid, hergestellt durch Polykondensieren eines cycloaliphatischen Diamins mit 10-20 Kohlenstoffatomen in den Monomereinheiten und einer aliphatischen Dicarbonsäure mit 8-18 Kohlenstoffatomen in den Monomereinheiten, gegebenenfalls des Weiteren hergestellt durch ein Lactam mit 6-14 Kohlenstoffatomen oder eine lineare aliphatische ω-Aminocarbonsäure mit 6-14 Kohlenstoffatomen,
(a4) einem semiaromatischen Polyamid basierend auf einem cycloaliphatischen Diamin mit 10-20 Kohlenstoffatomen und einer aromatischen Dicarbonsäure mit 8-18 Kohlenstoffatomen, gegebenenfalls des Weiteren hergestellt durch ein Lactam mit 6-14 Kohlenstoffatomen oder eine lineare aliphatische ω-Aminocarbonsäure mit 6-14 Kohlenstoffatomen,
(a5) einem semiaromatischen Polyamid basierend auf einem aliphatischen Diamin mit 2-12 Kohlenstoffatomen und einer aromatischen Dicarbonsäure mit 8-18 Kohlenstoffatomen, gegebenenfalls des Weiteren hergestellt durch ein Lactam mit 6-14 Kohlenstoffatomen oder eine lineare aliphatische ω-Aminocarbonsäure mit 6-14 Kohlenstoffatomen,
und deren Verbindung sowie deren (Co)-Polymer.

7. Dokument nach einem der vorhergehenden Ansprüche, wobei
das lineare aliphatische Polyamid (a1) oder (a2) ausgewählt ist aus der Gruppe bestehend aus: PA79, PA610, PA99, PA810, PA612, PA10, PA1010, PA812, PA614, PA11, PA1012, PA1210, PA913, PA139, PA814, PA12, PA1212, PA1113, PA1014, PA1410 und deren Verbindung.

8. Dokument nach den Ansprüchen 1-6, wobei
das cycloaliphatische Polyamid (a3) und das semiaromatische Polyamid (a4) ausgewählt sind aus der Gruppe bestehend aus MACM10, MACM11, MACM12, MACM13, MACM14, MACM16, PACM10, PACM11, PACM12, PACM13, PACM14, PACM16, TMDC10, TMDC11, TMDC12, TMDC13, TMDC14, TMDC15, TMDC16, MACMI/12, MACMT/12, PACMI/12, PACMT/12 oder Mischungen oder (Co)-Polyamiden basierend auf diesen Systemen.

9. Dokument nach Anspruch 8, wobei
das PACM einen Gehalt an trans, trans-Isomer von 30 - 70 % und vorzugsweise 35 - 65 % aufweist.

10. Dokument nach Anspruch 6, 8 oder 9, wobei
das cycloaliphatische Polyamid (a3) transparent mit einer Trübung von weniger als 3 % und besonders bevorzugt von weniger als 2 % ist, wobei beide Eigenschaften gemäß ASTM D1003 an spritzgegossenen Prüfkörpern mit 2 mm Dicke bestimmt werden.

11. Dokument nach einem der vorhergehenden Ansprüche, wobei der Ruß
eine Partikelgröße von 10 nm-10 µm, vorzugsweise von 50 nm-2 µm aufweist, und/oder
in einer Menge von 50-300 ppm, bevorzugt 100-200 ppm, bevorzugter 120-180 ppm, bezogen auf das Gesamtgewicht des Verbundstoffs auf Polymerbasis, vorliegt.

12. Dokument nach einem der vorhergehenden Ansprüche, wobei
der Verbundstoff ferner bis zu 20 Gew.-%, vorzugsweise bis zu 5 Gew.-% von einem oder mehreren zusätzlichen Inhaltsstoffen umfasst, die vorzugsweise ausgewählt sind aus der Gruppe bestehend aus: Stabilisatoren, Gleitmitteln, Färbungsmitteln, Weichmachern, Nukleierungsmitteln, Antioxidantien, Schlagzähmodifizierungsmitteln und UV-Absorbern.

13. Dokument nach den Ansprüchen 1-8, wobei
der thermoplastische Kunststoff von Schicht (A) ausgewählt ist aus Celluloseacetatpropionat, Celluloseacetatbutyrat, Polyestern, Polyamiden, Polycarbonaten, Polyimiden, Polyolefinen, Polyvinylchloriden, Polyvinylacetalen, Polyethern und Polysulfonamiden, wobei der thermoplastische Kunststoff der Schicht (A) vorzugsweise eine mit der Polyamidkomponente der Schicht (B) identische Polyamidkomponente ist.

14. Dokument nach den Ansprüchen 1-9, wobei
Schicht (A) eine weiße oder durchscheinende Schicht ist, und/oder
Schicht (A) sich zwischen zwei Schichten (B) befindet, und/oder
die Schichtstruktur zwischen Schicht (A) und Schicht(en) (B) mindestens eine weitere Schicht aufweist, die mindestens einen thermoplastischen Kunststoff umfasst.

15. Verfahren zur Herstellung des Dokuments nach einem der vorhergehenden Ansprüche, umfassend eine Schichtstruktur, umfassend Bonden der verschiedenen Kunststofffilme miteinander durch ein Verfahren ausgewählt aus Laminierung, Coextrusion, Beschriften im Formwerkzeug "In-Mould-Labelling" und direktem Kleben.

## Revendications

1. Document de sécurité et/ou de valeur, comprenant une structure en couches comprenant
(A) au moins une couche (A) comprenant une matière plastique thermoplastique, et
(B) au moins une couche (B) produite à partir d'un composite à base de polymère,
de préférence, le document est un document d'identification, par exemple une carte d'identification,
**caractérisé en ce que** le composite à base de polymère comprend
(a) un composant polyamide (a),
(b) un (co)polyamide (b) à base de motifs éther et de motifs amide, et
(c) du noir de carbone.

2. Document selon la revendication 1, dans lequel
le composite à base de polymère comprend sur la base de son poids total
5 à 95 %, de préférence 20 à 80 %, plus préférablement 30 à 70 % du composant polyamide (a), et
5 à 95 %, de préférence 20 à 80 %, plus préférablement 30 à 70 % du (co)polyamide (b).

3. Document selon la revendication 1 ou 2, dans lequel le (co)polyamide (b) est choisi parmi les (co)polymères de polyéther-bloc-amide (PEBA) composés de blocs de motifs amide et de séquences de motifs éther, de préférence choisis parmi les polyétheresteramides et les polyéther-bloc-amides.

4. Document selon les revendications 1 à 3, dans lequel les motifs éther du (co)polyamide (b) proviennent d'au moins un poly(éther d'alkylène) polyol, de préférence choisi parmi le polyéthylène glycol (PEG), le polypropylène glycol (PPG), le polytriméthylène glycol (PO3G), le polytétraméthylène glycol (PTMG) et leurs mélanges ou leurs (co)polymères ;
dans lequel le (co) polyamide (b) est composé de motifs amide qui sont des radicaux de monomères aliphatiques linéaires et de séquences de polyéther de type PTMG, PPG ou PEG.

5. Document selon la revendication 3 ou 4, dans lequel le poids moléculaire moyen en nombre des blocs polyamides est de 500 à 12 000 g/mole, de préférence de 2 000 à 6 000 g/mole, et/ou
le poids moléculaire moyen en nombre des séquences de motifs éther est de 200 à 4 000 g/mole, de préférence de 300 à 1 100 g/mole.

6. Document selon l'une quelconque des revendications précédentes, dans lequel
le composant polyamide (a) est choisi dans le groupe constitué par :
(a1) un polyamide aliphatique linéaire du type AB ayant de 10 à 12 atomes de carbone, produit par polymérisation de lactames ayant de 10 à 12 atomes de carbone dans le motif monomère ou par polycondensation d'acides ω-aminocarboxyliques ayant de 10 à 12 atomes de carbone dans le motif monomère,
(a2) un polyamide aliphatique linéaire du type AABB, produit par polycondensation de diamines ayant de 6 à 14 atomes de carbone dans les motifs monomères et d'acides dicarboxyliques ayant de 9 à 14 atomes de carbone dans les motifs monomères,
(a3) un polyamide cycloaliphatique, produit par polycondensation d'une diamine cycloaliphatique ayant de 10 à 20 atomes de carbone dans les motifs monomères et d'un acide dicarboxylique aliphatique ayant de 8 à 18 atomes de carbone dans les motifs monomères, éventuellement produit en outre par un lactame ayant de 6 à 14 atomes de carbone ou un acide ω-aminocarboxylique aliphatique linéaire ayant de 6 à 14 atomes de carbone,
(a4) un polyamide semi-aromatique à base d'une diamine cycloaliphatique ayant de 10 à 20 atomes de carbone et d'un acide dicarboxylique aromatique ayant de 8 à 18 atomes de carbone, éventuellement préparé en outre par un lactame ayant de 6 à 14 atomes de carbone ou un acide ω-aminocarboxylique aliphatique linéaire ayant de 6 à 14 atomes de carbone,
(a5) un polyamide semi-aromatique à base d'une diamine aliphatique ayant de 2 à 12 atomes de carbone et d'un acide dicarboxylique aromatique ayant de 8 à 18 atomes de carbone, éventuellement produit en outre par un lactame ayant de 6 à 14 atomes de carbone ou un acide ω-aminocarboxylique aliphatique linéaire ayant de 6 à 14 atomes de carbone,
et le composé correspondant ainsi que le (co)polymère correspondant.

7. Document selon l'une quelconque des revendications précédentes, dans lequel
le polyamide aliphatique linéaire (a1) ou (a2) est choisi dans le groupe constitué par : PA79, PA610, PA99, PA810, PA612, PA10, PA1010, PA812, PA614, PA11, PA1012, PA1210, PA913, PA139, PA814, PA12, PA1212, PA1113, PA1014, PA1410, et le composé correspondant.

8. Document selon les revendications 1 à 6, dans lequel le polyamide cycloaliphatique (a3) et le polyamide semi-aromatique (a4) sont choisis dans le groupe constitué par MACM10, MACM11, MACM12, MACM13, MACM14, MACM16, PACM10, PACM11, PACM12, PACM13, PACM14, PACM16, TMDC10, TMDC11, TMDC12, TMDC13, TMDC14, TMDC15, TMDC16, MACMI/12, MACMT/12, PACMI/12, PACMT/12 ou des mélanges ou des (co)polyamides à base de ces systèmes.

9. Document selon la revendication 8, dans lequel le PACM présente une teneur en isomère trans, trans de 30 à 70 % et de préférence de 35 à 65 %.

10. Document selon les revendications 6, 8 ou 9, dans lequel
le polyamide cycloaliphatique (a3) est transparent avec un trouble inférieur à 3 % et de préférence inférieur à 2 % lorsque les deux propriétés sont déterminées selon la norme ASTM D1003 sur des éprouvettes moulées par injection de 2 mm d'épaisseur.

11. Document selon l'une quelconque des revendications précédentes, dans lequel le noir de carbone
a une taille de particule de 10 nm à 10 µm, et de préférence de 50 nm à 2 µm, et/ou
est présent en une quantité de 50 à 300 ppm, de préférence de 100 à 200 ppm, plus préférablement de 120 à 180 ppm sur la base du poids total du composite à base de polymère.

12. Document selon l'une quelconque des revendications précédentes, dans lequel
le composite comprend en outre jusqu'à 20 %, de préférence jusqu'à 5 %, en poids, d'un ou plusieurs ingrédients supplémentaires, de préférence choisis dans le groupe constitué par : stabilisants, lubrifiants, matières colorantes, plastifiants, agents de nucléation, antioxydants, modificateurs de résistance aux chocs et absorbeurs d'UV.

13. Document selon les revendications 1 à 8, dans lequel la matière plastique thermoplastique de la couche (A) est choisi parmi l'acétate propionate de cellulose, l'acétate butyrate de cellulose, les polyesters, les polyamides, les polycarbonates, les polyimides, les polyoléfines, les poly(chlorure de vinyle), les polyvinylacétals, les polyéthers et les polysulfonamides, de préférence, la matière plastique thermoplastique de la couche (A) est un composant polyamide identique au composant polyamide de la couche (B).

14. Document selon les revendications 1 à 9, dans lequel la couche (A) est une couche blanche ou translucide, et/ou
la couche (A) se trouve entre deux couches (B), et/ou entre la couche (A) et la ou les couche(s) (B), la structure en couches présente au moins une autre couche comprenant au moins une matière plastique thermoplastique.

15. Procédé pour la production du document selon l'une quelconque des revendications précédentes, comprenant une structure en couches, comprenant la liaison des différents films de matière plastique les uns aux autres par un procédé choisi parmi la stratification, la coextrusion, l'étiquetage dans le moule et le collage direct.
